# EUROPEAN PATENT SPECIFICATION

(11) **EP 1 748 185 B1**
(45) Date of publication and mention of the grant of the patent: **02.05.2012**
(21) Application number: 05016419.3
(22) Date of filing: 28.07.2005
(51) Int. Cl.: F03D 11/00

(54) **Icing detection system for a wind turbine**
Feststellung von Vereisung für eine Windturbine
Détection de givrage pour éolienne

(43) Date of publication of application: 31.01.2007
(73) Proprietor: GENERAL ELECTRIC COMPANY, Schenectady, NY 12345 (US)
(72) Inventor: Mayr, Martin, 84032 Landshut (DE); Schram, Christian, 80339 Munich (DE); Krug, Florian, 81243 Munich (DE); Raithel, Jacob, 10245 Berlin (DE)
(74) Representative: Zimmermann, Gerd Heinrich

(56) References cited:
- WO-A-01/25631
- DE-A1- 19 528 862
- DE-C1- 10 157 759
- US-B1- 6 619 918
- US-B1- 6 890 152

## Description

### Field of the Invention

The present invention relates to an icing detection system for a wind turbine, a wind turbine equipped with such an icing detection system and a method for detecting an icing condition of a wind turbine.

### Background of the Invention

During recent years, more and more wind turbines are planned and erected at sites with higher icing probability during the year. For example, such sites may be located in cold and hash climate like northern Europe or alpine areas. Typical for such sites are harsh climatic conditions such as low temperatures, high turbulence and extreme gusts. These conditions lead to an increased probability of ice accretion, especially at the rotor blades of the turbines. Ice accretions result in increased mass loads on the wind turbine as well as in deterioration of the aerodynamic properties of the wind turbine. Furthermore, an unbalanced rotor may result from unbalanced ice distribution and/or aerodynamic imbalance of the rotor. Typically, the power output of the wind turbine decreases due to the icing. These and more details can be found, e.g., in *"*Large Wind Turbines Go into Cold Climate Regions" by B. Tammelin and H. Seifert, EWEC 2001 Conference, *"*Ice Loads, Case Study" by P. Antikainen and S. Peuranen, BOREAS V Conference, and *"*Technical Requirements for Rotor Blades Operating in Cold Climate" by H. Seifert, Deutsches Windenergie-Institut GmbH.

In view of the above, it is desirable to detect an icing condition of a wind turbine prior to damage or extreme reduction of turbine lifetime. For this purpose, the prior art references propose to provide direct icing sensors either at an individual turbine or for a wind farm. Several different sensor concepts are described including a webcam monitoring the rotor blades, special rotating multicylinder devices (RMC devices), comparison of heated and unheated anemometers, meteorological data bases in combination with temperature and humidity sensors or the like. However, all these concepts rely on a direct measurement of the icing condition. Therefore, these icing sensors are an extra feature of the wind turbine and have to be provided in addition to the "normal" wind turbine.

However, at sites where icing may occur but is rather seldom, e.g. only on 1 to 10 days per year, the extra costs incurred by providing extra icing sensors become economically questionable. Also, the prior art reports that the reliability of presently known direct icing sensors is not sufficiently high.

DE 195 28 862 describes a wind turbine in which each rotor blade includes a respective sensor for measuring the temperature of the rotor blade. The measured blade temperatures are inputted to a programmable automatic. The automatic is further connected to an environmental temperature sensor, an anemometer, a rotor speed sensor, and a vibration sensor. Vibration sensor may detect vibrations of the turbine tower. An icing condition of the rotor blades may be detected by vibration sensor due to the tower vibrations induced by the unbalance of the rotor blades.

WO 01/25631 describes a method for monitoring wind power plants acoustically. The method includes the following steps: recording a reference noise spectrum of a wind power plant and/or parts thereof at at least one particular location on the plant; storing this reference spectrum in a storage device; recording operating noise spectrum during operation at said particular location(s) on the plant; comparing the recorded operating spectrum with the stored reference spectrum; and determining deviations between the operating noise spectrum and the reference spectrum.

### Summary of the Invention

In view of the above, according to a first aspect of the present invention an icing detection system for a wind turbine as defined in claim 1 is provided.

In contrast to the prior art, the sensor of the above described first aspect of the invention is not a direct icing sensor and does also not include an anemometer, may it be heated or not, or a camera. Instead, a sensor for a mechanical variable of the wind turbine, typically for vibration or load conditions, is used to provide data from which the icing condition of the turbine is detected. However, wind turbines are typically equipped with such type of sensor due to specific regulations which they have to observe. For example, wind turbines have to obey the *"*Directive for Wind Power Installations", issued by the "Deutsche Institut für Bautechnik (DIBt) " [German Institute for Construction Technology] in Berlin. This Directive sets forth, inter alia, a regulation regarding operational oscillation monitoring of the tower. Accordingly, in an operating range in which the excitation frequency of the rotor is in a band width of +/-5% of the natural frequency of the tower, permanent operation of the wind turbine without operational oscillation monitoring is inadmissible. Therefore, a wind turbine has to be equipped with a sensor for oscillation monitoring. Since the present invention utilizes such sensors for detecting icing conditions of the turbine, additional direct icing sensors as provided by the prior art can be omitted. In other words, the present invention provides an icing detection system that can detect an icing condition of the wind turbine on the basis of data provided by sensors which belong to the normal equipment of a wind turbine and are not an extra feature. Thus, the costs of the icing detection system can be considerably reduced compared with prior art solutions requiring one or more direct icing detectors. Furthermore, the sensors for mechanical variables typically have a longer lifetime and are more reliable compared to the direct icing detectors available.

According to another aspect of the present invention, the use of a sensor in accordance with claim 13 is provided.

According to another aspect of the present invention, a wind turbine equipped with an icing detection system as described above is provided. Typically, in such a wind turbine the detection means is included in a wind turbine controller. However, it may also be provided as a separate part of the wind turbine or may even be remotely located at a distant control site.

According to an even further aspect of the present invention, a method for detecting an icing condition of a wind turbine as defined in claim 10 is provided. turbine does not operate at its maximum possible level, the wind turbine should be brought to the maximum possible operational level.

### Brief Description of Drawings

A full and enabling disclosure of the present invention, including the best mode thereof, to one of ordinary skill in the art, is set forth more particularly in the remainder of the specification, including reference to the accompanying figures wherein:
- Fig. 1: shows a first embodiment, which however does not form part of the present invention.
- Fig. 2: shows a second embodiment, which however does not form part of the present invention.
- Fig. 3: shows a third embodiment, which however does not form part of the present invention.
- Fig. 4: shows a fourth embodiment forming part of the present invention.
- Fig. 5: shows a fifth embodiment forming part of the present invention.
- Fig. 6: shows a sixth embodiment forming part of the present invention.
- Fig. 7: shows a flowchart of a method according to an embodiment of the present invention.

### Detailed Description

Reference will now be made in detail to the various embodiments of the invention, one or more examples of which are illustrated in the figures. Each example is provided by way of explanation of the invention, and is not meant as a limitation of the invention. For example, features illustrated or described as part of one embodiment can be used on or in conjunction with other embodiments to yield yet a further embodiment. It is intended that the present invention includes such modifications and variations.

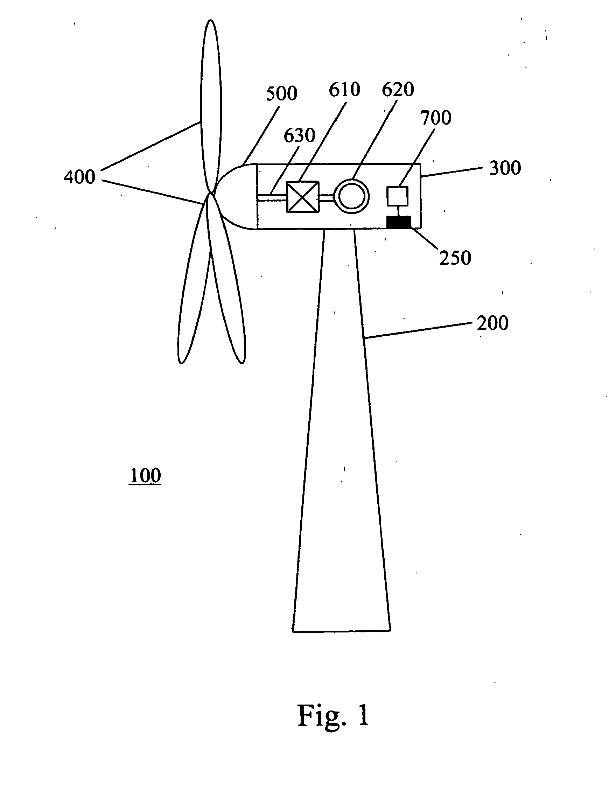

Fig. 1 shows a first embodiment. Therein, a wind turbine 100 includes a tower 200 on which a machine nacelle 300 is mounted. At a lateral end of nacelle 300, a hub 500 is mounted which supports rotor blades 400. Within nacelle 300, a gear box 610 and a generator 620 are disposed. The gear box 610 and the generator 620 are connected to hub 500 via a drive train 630. However, gear box 610 may be also considered as a part of the drive train. Furthermore, an icing detection system is disposed within nacelle 300.

The icing detection system includes a sensor 250 for measuring a mechanical variable of the wind turbine 100. For example, the sensor 250 may be digital structural vibration sensor PCH 1026 or PCH 1028 available from PCH Engineering A/S, 2970 Hoersholm, Denmark. Typically, the mechanical variable measured by sensor 250 is a vibrational condition or a load condition of the wind turbine 100. More typically, the mechanical variable is the deflection of the tower200, the vibration of at least one rotor blade 400 of the wind turbine 100, the mechanical load onto at least one rotor blade 400 of the wind turbine 100, the vibration of the drive train 610, 630 of the wind turbine100, and/or the mechanical load onto the drive train 610, 630 of the wind turbine. In the embodiment shown in Fig. 1, sensor 250 measures the deflection or deflection amplitude of tower 200.

The icing detection system further includes a detection means 700 which is connected to the sensor 250 so that the sensor 250 can transmit mechanical variable data to the detection means 700. The detection means 700 is adapted to detect an icing condition of the wind turbine 100 on the basis of the mechanical variable data provided by the sensor 250, i.e. the deflection or deflection amplitude in the embodiment shown in Fig. 1. For this purpose, the values and/or relative errors of the mechanical variable are calculated for different cases with and without icing using a mathematical model. From the result, icing detection rules can be implemented in the detection means 700. For example, symmetric icing, i.e. the ice accretion is symmetrically distributed on the rotor blades 400, results in an increased drag. Accordingly, the mechanical loads as well as the power output are decreased. In the case of asymmetric icing, the ice is asymmetrically distributed on the rotor blades. For example, one blade is completely iced whereas the other two blades are only partly iced, e.g. when ice has been thrown off the blades by centrifugal forces. However, not only mass imbalance but also aerodynamic imbalance may result from icing when the ice accretion leads to varying lift and drag coefficients among the rotor blades. An unbalanced rotor, may it be mass or aerodynamic imbalance, may lead to an increase in load and also to an increase in vibration. For example, mechanical loads may increase up to 180 % compared to load cases without ice. The increase in tower head deflection may reach from 200 % even for small asymmetric icing up to even 5000 % for large ice accretion. Based on detailed simulations for a specific type of wind turbine, rules for detecting an icing condition from the mechanical variable provided by sensor 250 can be deduced and implemented.

As mentioned above, wind turbines have to obey the *"*Directive for Wind Power Installations ", issued by the "Deutsche Institut für Bautechnik (DIBt) " [German Institute for Construction Technology] in Berlin. This Directive sets forth, inter alia, a regulation regarding operational oscillation monitoring of the tower. Accordingly, in an operating range in which the excitation frequency of the rotor is in a band width of +/-5% of the natural frequency of the tower, permanent operation of the wind turbine without operational oscillation monitoring is inadmissible. Therefore, a wind turbine has to be equipped with a sensor for oscillation monitoring. Since the above described embodiment utilizes such a sensor for detecting icing conditions of the turbine, additional direct icing sensors as provided by the prior art can be omitted in the present embodiment. In other words, the above described icing detection system can detect an icing condition of the wind turbine on the basis of data provided by an oscillation sensor belonging to the normal equipment of the wind turbine. Thus, the costs of the icing detection system can be considerably reduced compared with prior art solutions requiring one or more direct icing detectors. Furthermore, the sensor for mechanical variables typically has a longer lifetime and is more reliable compared to the direct icing detectors available.

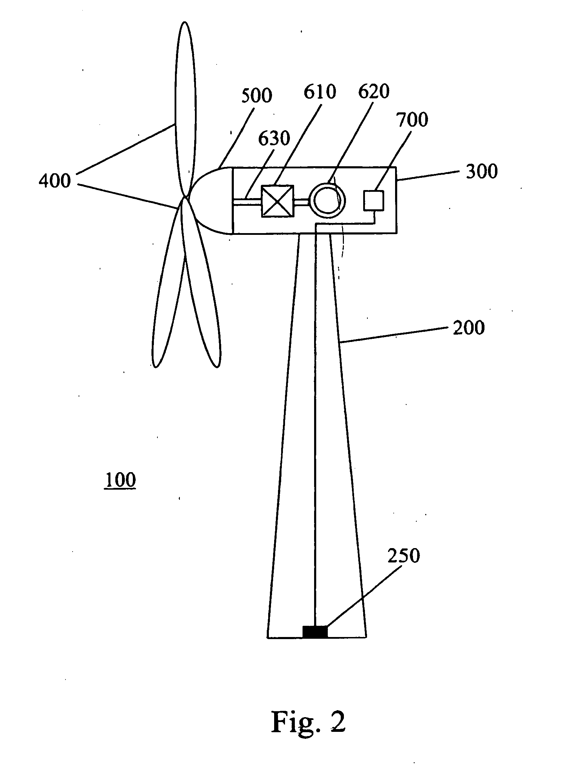

Fig. 2 shows a second embodiment. Since the configuration of this embodiment is similar to the embodiment shown in Fig. 1, only the differences will be described. The detection means 700 of the second embodiment is connected to a sensor 250 located at the root of the tower 200. This sensor 250 is a load sensor measuring the load on the tower roots, i.e. at the foundation of tower 200. Icing detection device 700 uses the tower root load data provided by sensor 250 to detect an icing condition of the wind turbine 100.

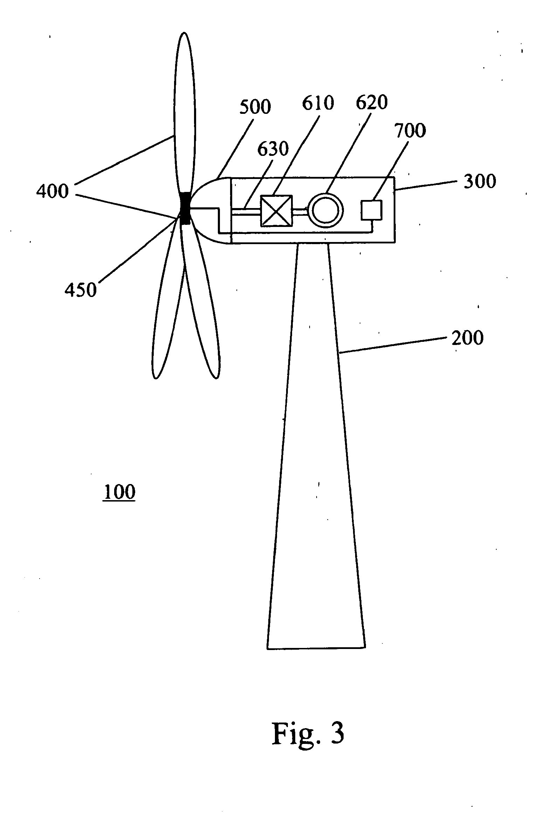

Fig. 3 shows a third embodiment. Since the configuration of this embodiment is similar to the embodiment shown in Fig. 1, only the differences will be described. The detection means 700 of the second embodiment is connected to sensor means 450 located at the roots of the rotor blades 400. Sensor 450 is adapted to measure the load and/or the vibrations of the rotor blades 400. Although there might be only a single sensor 450 provided for all three rotor blades, it is advantageous to use an individual sensor for every rotor blade. Thus, an imbalance of the rotor blades can be easily detected by the sensors 450. Icing detection device 700 uses the rotor blade data provided by sensor or sensors 450 to detect an icing condition of the wind turbine 100.

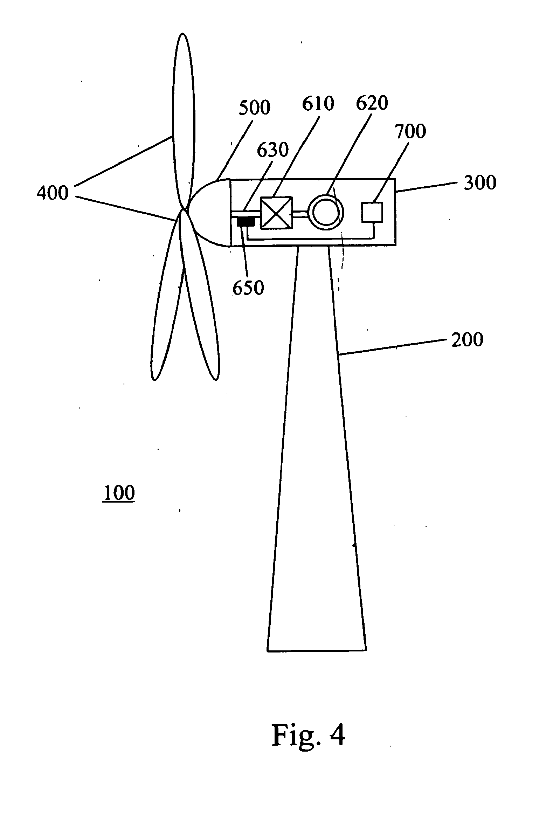

Fig. 4 shows a fourth embodiment forming part of the present invention. Since the configuration of this embodiment is similar to the embodiment shown in Fig. 1, only the differences will be described. The detection means 700 of the second embodiment is connected to sensor means 650 located at a rotating shaft 630 of the drive train of the wind turbine 100. Sensor 650 is adapted to measure the load and/or the vibrations of the rotating shaft 630. Icing detection device 700 uses the rotating shaft data provided by sensor 650 to detect an icing condition of the wind turbine 100.

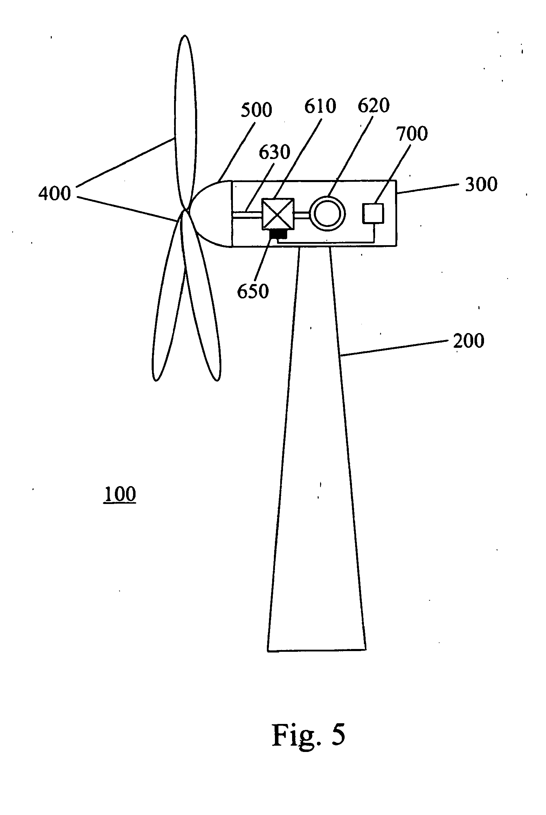

Fig. 5 shows a fifth embodiment forming part of the present invention. Since the configuration of this embodiment is similar to the embodiment shown in Fig. 1, only the differences will be described. The detection means 700 of the second embodiment is connected to sensor means 650 located at a gear box 610 of the drive train of the wind turbine 100. Sensor 650 is adapted to measure the load and/or the vibrations of the gear box 610. Icing detection device 700 uses the gear box data provided by sensor 650 to detect an icing condition of the wind turbine 100.

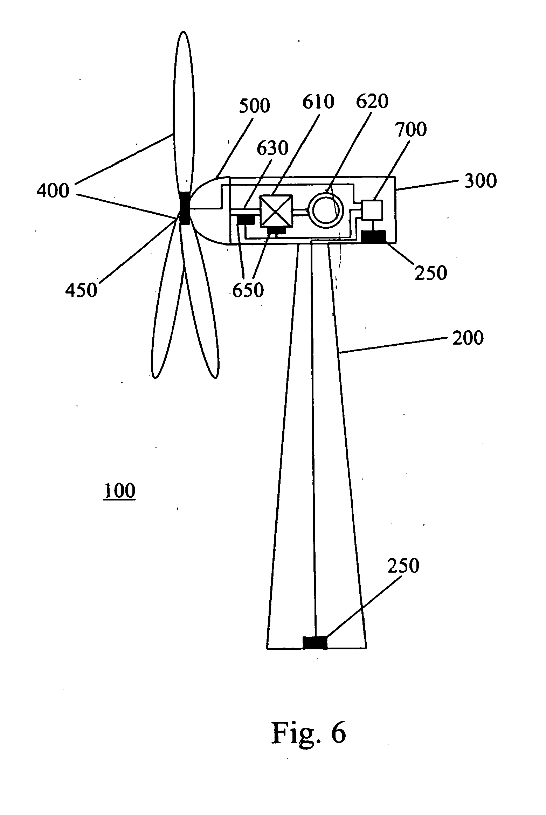

Fig. 6 shows a sixth embodiment forming part of the present invention. Therein, icing detection device 700 is connected to a tower deflection sensor 250, a tower root load sensor 250, a rotor blade sensor 450, a rotating shaft sensor 650 and a gear box sensor 650. Icing detection device 700 uses the all the data provided by all these sensors to detect an icing condition of the wind turbine 100. Of course, also only subgroups and combinations of individual ones of these sensors may be used for the icing detection system.

It should be understood that the above mentioned sensor types belong to the normal equipment of up-to-date wind turbines so that in each case no additional direct ice sensor has to be provided. Thus, all of the above described embodiments realize a cost reduction and simplification of the whole system. Also, no additional function tests for these sensors have to be conducted as it would be the case for specific extra icing sensors.

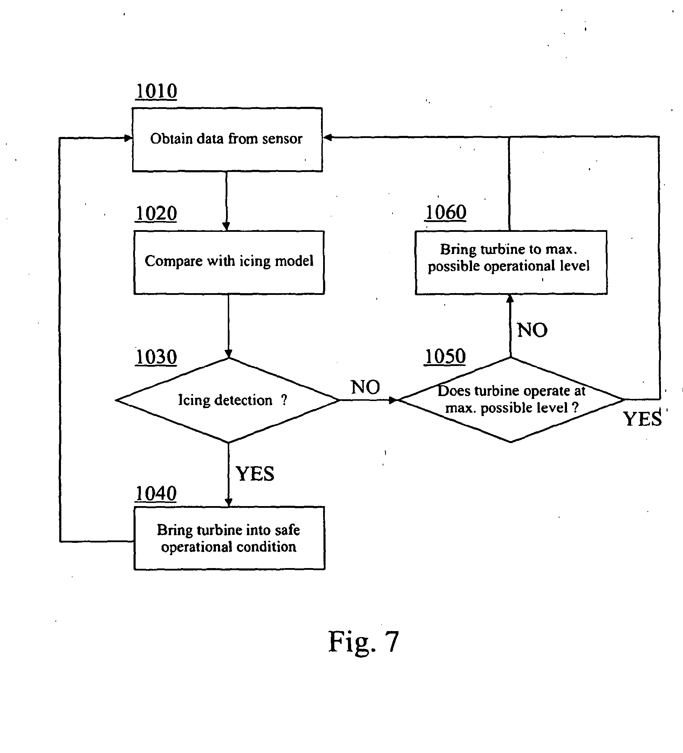

Fig. 7 shows a flowchart of a method according to an embodiment of the present invention. Therein, a basic method for icing detection is shown in method steps 1010, 1020, and 1030. In step 1010, an icing detection means obtains mechanical variable data from a sensor, e.g. a vibration sensor. These data are then compared with the results from an icing model. The icing model may be based on a mathematical model or a heuristic model or a combination of theoretical and heuristic models. Of course, it should be understood that not only the mechanical variable values but also data derived there from, e.g. a moving average, the relative error or the like, can be used for comparison with the icing model implemented in the detection means. Next, in step 1030 icing of the wind turbine is detected if the measured data are classified to belong to the icing category. If the data do not belong to the icing category, no icing is detected. Thus, a method of icing detection is provided without the need of data input from extra direct icing sensors.

Now, the method according to the present invention may have further optional method steps which are related to wind turbine control. For example, if an icing condition of the wind turbine is detected, the detection means reports this to a wind turbine control. Typically, the detection means is a part of the wind turbine control. Then, in step 1040 the wind turbine is brought into a safe operational condition, e.g. by braking the rotor or even a shut-down of the wind turbine. Thus, damaging of the wind turbine due to the icing condition is prevented. Furthermore, start-up of an iced wind turbine can be interrupted to prevent reconnection of the iced wind turbine. If no icing condition is detected, the wind turbine controller checks in step 1050 whether the wind turbine operates at the presently maximum possible level. For example, the wind turbine operational level could have been lowered before in step 1040 due to detection of an icing condition. When the icing condition has ended, e.g. because of warming, the wind turbine operates still at the lower operational level. However, since the icing condition does not longer exist the wind turbine can be brought back to its maximum possible operational level in step 1060. It should be understood that this maximum possible operational level does not automatically mean that it is the maximum power output level of the wind turbine. The wind turbine may have to obey a number of further requirements, e.g. from a grid operator, so that the maximum possible operational level may be set below the maximum power output level. Of course, if the wind turbine operates at its maximum possible operational level and no icing is detected, no intervention of the wind turbine controller is necessary. Finally, the above described cycle is repeated.

Having thus described the invention in detail, it should be apparent for a person skilled in the art that various modifications can be made in the present invention without departing from the scope of the following claims.

## Claims

1. An icing detection system for a wind turbine (100), comprising:
a sensor (250, 450, 650) for measuring a vibration of and/or a mechanical load onto the drive train (610, 630) of the wind turbine (100), and
a detection means (700) connected to the sensor (250, 450, 650) and adapted to detect an icing condition of the wind turbine (100) on the basis of the vibration and/or mechanical load data provided by the sensor (250, 450, 650).

2. The icing detection system according to claim 1, wherein the sensor (650) is located at a rotating shaft (630) of the drive train.

3. The icing detection system according to claim 1 or 2, wherein the sensor (650) is located at a gear box (610) of the drive train.

4. The icing detection system according to any of the preceding claims, further comprising a sensor (250) for measuring the deflection of the tower (200), wherein the detection means (700) is connected to said sensor (250).

5. The icing detection system according to any of the preceding claims, further comprising a sensor (450) for measuring the vibration of at least one rotor blade (400) of the wind turbine (100), wherein the detection means (700) is connected to said sensor (450).

6. The icing detection system according to any of the preceding claims, further comprising a sensor (450) for measuring the mechanical load onto at least one rotor blade (400) of the wind turbine (100).

7. The icing detection system according to any of the preceding claims, wherein the detection means (700) detects the icing condition on the basis of the relative error of the vibration and/or mechanical load onto the drive train (610, 630).

8. A wind turbine (100) comprising an icing detection system according to any of the preceding claims.

9. The wind turbine (100) according to claim 8, wherein the detection means (700) is included in a wind turbine controller.

10. A method for detecting an icing condition of a wind turbine, comprising the stages of:
(a) measuring a vibration of and/or a mechanical load onto the drive train of the wind turbine,
(b) providing measured data of the vibration and/or mechanical load to a detection means,
(c) comparing the measured data with model data for an icing condition to detect whether the wind turbine is in an icing condition or not.

11. The method according to claim 10, further comprising the stage of:
(d) bringing the wind turbine into a safe operational condition if an icing condition of the wind turbine is detected.

12. The method according to claim 10 or 11, further comprising the stages of
(e) if no icing condition is detected, checking whether the wind turbine operates at its maximum possible level, and
(f) if the wind turbine does not operate at its maximum possible level, bringing the wind turbine to the maximum possible operational level.

13. Use of a sensor (250, 450, 650) adapted to measure a vibration of and/or a mechanical load onto the drive train of a wind turbine (100) for providing data from which an icing condition of the wind turbine (100) can be detected by a detection means (700).

## Patentansprüche

1. Ein Eiserkennungssystem für eine Windturbine (100), umfassend:
einen Sensor (250, 450, 650) zum Messen einer Vibration eines Antriebsstrangs (610, 630) und/oder einer mechanischen Belastung auf den Antriebsstrang der Windturbine (100); und
ein Erkennungsmittel (700), das mit dem Sensor (250, 450, 650) verbunden sind, und ausgelegt ist, einen Vereisungszustand der Windturbine (100) auf der Basis der Daten über die Vibration und/oder die mechanische Belastung, die von dem Sensor (250, 450, 650) zur Verfügung gestellt werden, zu erkennen.

2. Das Eiserkennungssystem gemäß Anspruch 1, wobei der Sensor (650) an einer Rotationswelle (630) des Antriebsstrangs angeordnet ist.

3. Das Eiserkennungssystem gemäß Anspruch 1 oder 2, wobei der Sensor (650) an einen Getriebegehäuse (610) des Antriebsstrangs angeordnet ist.

4. Das Eiserkennungssystem gemäß einem der vorhergehenden Ansprüche, des Weiteren umfassend einen Sensor (250) zum Messen der Auslenkung des Turms (200), wobei das Erkennungsmittel (700) mit dem Sensor (250) verbunden ist.

5. Das Eiserkennungssystem gemäß einem der vorhergehenden Ansprüche, des Weiteren umfassend einen Sensor (450) zum Messen der Vibration von wenigstens einem Rotorblatt (400) der Windturbine (100), wobei das Erkennungsmittel (700) mit dem Sensor (450) verbunden ist.

6. Das Eiserkennungssystem gemäß einem der vorhergehenden Ansprüche, des Weiteren umfassend einen Sensor (450) zum Messen der mechanischen Last auf wenigstens einem Rotorblatt (400) der Windturbine (100).

7. Das Eiserkennungssystem gemäß einem der vorhergehenden Ansprüche, wobei das Erkennungsmittel (700) den Vereisungszustand auf Basis des relative Fehlers der Vibration und/oder mechanischen Belastung auf dem Antriebstrang (610, 630) erkennt.

8. Eine Windturbine (100) umfassend ein Eiserkennungssystem gemäß einem der vorhergehenden Ansprüche.

9. Die Windturbine (100) gemäß Anspruch 8, wobei das Erkennungsmittel (700) in einer Windturbinensteuerung beinhaltet ist.

10. Ein Verfahren zum Erkennen eines Vereisungszustands einer Windturbine, umfassend die folgenden Schritte:
(a) Messen einer Vibration von dem Antriebsstrang und/oder einer mechanischem Last auf dem Antriebsstrang der Windturbine,
(b) zur Verfügung Stellen von gemessenen Daten über die Vibration und/oder die mechanische Last für ein Erkennungsmittel,
(c) Vergleichen der gemessenen Daten mit Modelldaten für einen Eiszustand, um zu erkennen, ob die Windturbine in einem Eiszustand ist oder nicht.

11. Das Verfahren gemäß Anspruch 10 des Weiteren umfassend den Schritt:
(d) Bringen der Windturbine in einen sicheren Betriebszustand, wenn ein Eiszustand der Windturbine erkannt wird.

12. Das Verfahren gemäß Anspruch 10 oder 11 des Weiteren umfassend die Schritte:
(e) wenn kein Eiszustand erkannt wird, Überprüfen, ob die Windturbine auf ihrem maximal möglichen Niveau läuft; und
(f) wenn die Turbine nicht auf ihrem maximal möglichen Niveau läuft, Bringen der Windturbine auf ihr maximal mögliches Betriebsniveau.

13. Benutzung eines Sensors (250, 450, 650), der ausgelegt ist, eine Vibration von dem Antriebsstrang und/oder eine mechanische Last auf den Antriebsstrang der Windturbine (100) zu messen, um Daten zur Verfügung zu stellen, von denen ein Eiszustand der Windturbine (100) von einem Erkennungsmittel (700) erkannt werden kann.

## Revendications

1. Système de détection de givrage pour une éolienne (100), comprenant :
un capteur (250, 450, 650) pour mesurer une vibration de la chaîne de transmission (610, 630) de l'éolienne (100) et/ou une charge mécanique sur celle-ci ; et
des moyens de détection (700) connectés au capteur (250, 450, 650) et adaptés pour détecter un état de givrage de l'éolienne (100) sur la base des données de vibration et/ou de charge mécanique fournies par le capteur (250, 450, 650).

2. Système de détection de givrage selon la revendication 1, dans lequel le capteur (650) se trouve en un arbre rotatif (630) de la chaîne de transmission.

3. Système de détection de givrage selon la revendication 1 ou 2, dans lequel le capteur (650) se trouve en une boîte d'engrenages (610) de la chaîne de transmission.

4. Système de détection de givrage selon l'une quelconque des revendications précédentes, comprenant en outre un capteur (250) pour mesurer la déviation de la tour (200), dans lequel les moyens de détection (700) sont raccordés audit capteur (250).

5. Système de détection de givrage selon l'une quelconque des revendications précédentes, comprenant en outre un capteur (450) pour mesurer la vibration d'au moins une pale de rotor (400) de l'éolienne (100), dans lequel les moyens de détection (700) sont connectés audit capteur (450).

6. Système de détection de givrage selon l'une quelconque des revendications précédentes, comprenant en outre un capteur (450) pour mesurer la charge mécanique sur au moins une pale de rotor (400) de l'éolienne (100).

7. Système de détection de givrage selon l'une quelconque des revendications précédentes, dans lequel les moyens de détection (700) détectent l'état de givrage sur la base de l'erreur relative de la vibration et/ou charge mécanique sur la chaîne de transmission (610, 630).

8. Eolienne (100) comprenant un système de détection de givrage selon l'une quelconque des revendications précédentes.

9. Eolienne (100) selon la revendication 8, dans laquelle les moyens de détection (700) sont compris dans un contrôleur d'éolienne.

10. Procédé de détection d'un état de givrage d'une éolienne, comprenant les étapes suivantes :
(a) mesurer une vibration de la chaîne de transmission de l'éolienne et/ou une charge mécanique sur celle-ci,
(b) fournir des données mesurées de la vibration et/ou la charge mécanique à des moyens de détection,
(c) comparer les données mesurées à des données modèles pour un état de givrage pour détecter si l'éolienne est ou non dans un état de givrage.

11. Procédé selon la revendication 10, comprenant en outre l'étape suivante :
(d) amener l'éolienne dans un état de fonctionnement sûr si un état de givrage de l'éolienne est détecté.

12. Procédé selon la revendication 10 ou 11, comprenant en outre les étapes suivantes :
(e) si aucun état de givrage n'est détecté, vérifier si l'éolienne fonctionne à son niveau maximal possible, et
(f) si l'éolienne ne fonctionne pas à son niveau maximal possible, amener l'éolienne au niveau de fonctionnement maximal possible.

13. Utilisation d'un capteur (250, 450, 650) conçu pour mesurer une vibration de la chaîne de transmission d'une éolienne (100) et/ou une charge mécanique sur celle-ci pour fournir des données à partir desquelles un état de givrage de l'éolienne (100) peut être détecté par des moyens de détection (700).
